# EUROPEAN PATENT APPLICATION

(11) **EP 2 120 052 A1**
(43) Date of publication of application: **18.11.2009**
(21) Application number: 08721889.7
(22) Date of filing: 12.03.2008
(51) Int. Cl.: G01N 35/00, G01N 35/02

(54) **ANALYZING DEVICE AND ANALYZING METHOD**

(30) Priority: 12.03.2007 JP 2007062220
(71) Applicant: Olympus Corporation, Tokyo 151-0072 (JP)
(72) Inventor: KOJIMA, Keijiro, Tokyo 151-0072 (JP)
(74) Representative: von Hellfeld, Axel
(86) International application number: PCT/JP2008/054473
(87) International publication number: WO 2008/111607

(57) **Abstract**

An analyzer (1) according to the present invention analyzes a specimen using a reagent in a reagent vessel (35), and includes an RFID tag (35a) that is attached to the reagent vessel (35) and is capable of communicating with an external device through radio waves of a predetermined frequency, an RFID reader/writer (36) that writes, into the RFID tag (35a), history information that is generated as the reagent in the reagent vessel (35) is used, and reads the history information from the RFID tag (35a) that is attached to the reagent vessel (35) containing the reagent to be used, and a control unit (41) that determines whether a proper analysis is performable using the reagent in the reagent vessel (35), to which the RFID tag (35a) is attached, based on the history information read by the RFID reader/writer (36).

## Description

### TECHNICAL FIELD

The present invention relates to an analyzer and an analysis method for analyzing a specimen using a reagent in a reagent vessel.

### BACKGROUND ART

Conventionally, analyzers have been known as apparatuses that automatically analyze a specimen, such as blood and body fluid. Analyzers add a specimen into a reaction vessel, in which a reagent has been dispensed, and optically detect reactions that occur between the reagent and the specimen in the reaction vessel.

Considering a change in activity of a reagent caused by exposure to air after unsealing, a validity period after opening the seal is set for each reagent to be used in analyzers. To maintain the analysis accuracy, it is desirable that a measurement is performed using a reagent within the validity period after opening. Thus, in conventional analyzers, a barcode indicative of the validity period is affixed to a reagent vessel. By reading the validity period from the barcode at the first setting of the reagent vessel, and by timing an elapsed time since the first use, whether a reagent to be used in a measurement is within the validity period after opening or not is determined (Patent Document 1).

Also, in such analyzers, when a reagent runs short during a measurement, the measurement of a specimen, for which the reagent has been insufficient, is not performed. Therefore, it is necessary to determine whether a reagent in a reagent vessel set in an analyzer has a sufficient amount for measuring all accepted specimens. Thus, in a conventional analyzer, the amount of reagent in a reagent vessel is detected at the time of first setting of the reagent vessel. The remaining amount of a reagent is calculated and managed in the analyzer by subtracting an amount of reagent consumed by reagent dispensation from the amount of reagent at the first setting.

Moreover, a method has conventionally been proposed in which analyzers are connected to an administration apparatus through a network line or the like to properly perform analyses with the use of reagents in respective reagent vessels. The validity period after opening and the remaining amount of a reagent of each reagent vessel set in each analyzer are comprehensively managed therein (Patent Document 2).

Patent Document 1: Japanese Patent Laid-open Publication No. 2000-310643
Patent Document 2: Japanese Patent Laid-open Publication No. 2003-315345

### DISCLOSURE OF INVENTION

### PROBLEM TO BE SOLVED BY THE INVENTION

According to Patent Document 1, a validity period after opening and a remaining amount of a reagent are managed separately for each of analyzers based on information recorded in a barcode. Therefore, the information of the validity period after opening and the remaining amount of a reagent cannot be communicated among analyzers. When a reagent vessel that has once been used in an analyzer is moved to and re-set in another analyzer, the information of the validity period after opening and the remaining amount of the reagent of this reagent vessel cannot be received, and the validity period after opening and the remaining amount of the reagent cannot be accurately grasped in the analyzer to which the reagent is moved. As a result, in the conventional analyzer, there has been a case where a reagent whose validity period after opening has been expired is used or a case where a remaining amount of a reagent is small and the reagent runs short during a measurement.

Also, in the analysis system according to Patent Document 2, there has been a problem that a large-scale and complicated analysis system is required to be built because each of the analyzers is connected to and controlled by the administration apparatus through a network line in order to perform the management of reagents.

The present invention has been made in view of the disadvantages with the conventional art described above. An object of the present invention to provide an analyzer and an analysis method with which a proper analysis can be performed using a reagent in a reagent vessel set in the analyzer without using a large-scale analysis system.

### MEANS FOR SOLVING PROBLEM

To solve the problem described above and achieve the object, an analyzer according to the present invention for analyzing a specimen using a reagent in a reagent vessel, includes: an information storage medium that is attached to the reagent vessel and is capable of communicating with an external device through radio waves of a predetermined frequency; a writing unit that writes history information that is generated as the reagent in the reagent vessel is used into the information storage medium; a reading unit that reads the history information from the information storage medium that is attached to the reagent vessel containing the reagent to be used; and a determining unit that determines whether a proper analysis is performable using the reagent in the reagent vessel, to which the information storage medium is attached, based on the history information read by the reading unit.

In the analyzer according to the present invention, the history information is a use-start time of the reagent in the reagent vessel, the writing unit writes the use-start time into the information storage medium based on a time when the reagent vessel is opened, the reading unit reads the use-start time from the information storage medium prior to use of the reagent in the reagent vessel, and the determining unit determines whether a predetermined validity period after opening of the reagent in the reagent vessel has been expired based on the use-start time read by the reading unit, prior to use of the reagent in the reagent vessel.

In the analyzer according to the present invention, the history information is a remaining reagent amount in the reagent vessel, the writing unit writes a value obtained by subtracting a reagent amount that is used between previous writing and present writing from the remaining reagent amount at previous writing, as a new remaining reagent amount into the information storage medium, the reading unit reads the remaining reagent amount from the information storage medium that is attached to the reagent vessel prior to use of the reagent in the reagent vessel, and the determining unit determines whether the reagent has a sufficient amount for an analysis based on the remaining reagent amount read by the reading unit.

In the analyzer according to the present invention, an output unit that outputs a warning to notify that a proper analysis is not performable using the reagent in the reagent vessel when the determining unit determines that a proper analysis is not performable using the reagent in the reagent vessel is further included.

In the analyzer according to the present invention, the reading unit reads, each time the analyzer is activated, the history information from the information storage medium, and the determining unit determines, each time the analyzer is activated, whether a proper analysis is performable using the reagent in the reagent vessel, to which the information storage medium is attached, based on the history information read by the reading unit.

In the analyzer according to the present invention, the writing unit writes, after dispensing the reagent, an amount obtained by subtracting an amount of reagent dispensed by the reagent dispensation from the remaining reagent amount at previous writing, as the new remaining reagent amount, into the information storage medium, the reading unit reads, prior to the reagent dispensation, the remaining reagent amount from the information storage medium that is attached to the reagent vessel containing the reagent to be dispensed, and the determining unit determines, prior to the reagent dispensation, whether the reagent has a sufficient amount for an analysis based on the remaining reagent amount read by the reading unit.

Also, an analysis method according to the present invention for analyzing a specimen using a reagent in a reagent vessel, includes: writing history information that is generated as the reagent in the reagent vessel is used into an information storage medium that is attached to the reagent vessel and is capable of communicating with an external device through radio waves of a predetermined frequency; reading the history information from the information storage medium that is attached to the reagent vessel containing the reagent to be used; and determining whether a proper analysis is performable using the reagent in the reagent vessel, to which the information storage medium is attached, based on the history information read at the reading.

In the analysis method according to the present invention, the history information is a use-start time of the reagent in the reagent vessel, the writing includes writing the use-start time into the information storage medium based on a time when the reagent vessel is opened, the reading includes reading the use-start time from the information storage medium prior to use of the reagent in the reagent vessel, and the determining includes determining whether a predetermined validity period after opening of the reagent in the reagent vessel has been expired based on the use-start time read at the reading, prior to use of the reagent in the reagent vessel.

In the analysis method according to the present invention, the history information is a remaining reagent amount in the reagent vessel, the writing includes writing a value obtained by subtracting a reagent amount that is used between previous writing and present writing from the remaining reagent amount at previous writing, as a new remaining reagent amount into the information storage medium, the reading includes reading the remaining reagent amount from the information storage medium prior to use of the reagent in the reagent vessel, and the determining includes determining whether the reagent has a sufficient amount for an analysis based on the remaining reagent amount read at the reading.

In the analysis method according to the present invention, outputting a warning to notify that a proper analysis is not performable using the reagent in the reagent vessel when it is determined at the determining that a proper analysis is not performable using the reagent in the reagent vessel is further included.

In the analysis method according to the present invention, the reading includes reading the history information from the information storage medium each time the analyzer is activated, and the determining includes determining, each time the analyzer is activated, whether a proper analysis is performable using the reagent in the reagent vessel, to which the information storage medium is attached, based on the history information read at the reading.

In the analysis method according to the present invention, the writing includes writing, after dispensing the reagent, an amount obtained by subtracting an amount of reagent dispensed by the reagent dispensation from the remaining reagent amount at previous writing, as the new remaining reagent amount, into the information storage medium, the reading includes reading, prior to the reagent dispensation, the remaining reagent amount from the information storage medium that is attached to the reagent vessel containing the reagent to be dispensed, and the determining includes determining, prior to the reagent dispensation, whether the reagent has a sufficient amount for an analysis based on the remaining reagent amount read at the reading.

### EFFECT OF THE INVENTION

According to the present invention, history information that is generated as a reagent in a reagent vessel is used can be written as needed into an information storage medium attached to the reagent vessel at each of analyzers. Also, the reagent management is performed by determining whether a proper analysis is performable using the reagent in the reagent vessel by reading the history information from the information storage medium of the reagent vessel, in which the reagent to be used is contained. Therefore, a proper analysis can be performed without using a large-scale analysis system.

### BRIEF DESCRIPTION OF DRAWINGS

FIG. 1 is a schematic diagram showing a main configuration of an analyzer according to an embodiment.
FIG. 2 is a schematic diagram showing a main part of a reagent container shown in FIG. 1.
FIG. 3 is a flowchart showing a procedure of managing reagents in the analyzer shown in FIG. 1.
FIG. 4 is a diagram showing an example of a display screen of a display unit shown in FIG. 1.
FIG. 5 is a diagram explaining a move of a reagent vessel shown in FIG. 1.
FIG. 6 is a diagram explaining a move of the reagent vessel shown in FIG. 1.
FIG. 7 is a diagram showing an example of a display screen of the display unit shown in FIG. 1.

### EXPLANATIONS OF LETTERS OR NUMERALS

- 1: Analyzer
- 2: Specimen transfer mechanism
- 3: Measurement system
- 4: Control system
- 21a: Specimen vessel
- 21b: Specimen rack
- 30: Reaction vessel
- 32: Specimen dispensing unit
- 32a, 37a: Arm
- 33: Reaction table
- 34: Reagent container
- 35: Reagent vessel
- 35a: RFID tag
- 36: RFID reader/writer
- 37: Reagent dispensing unit
- 38: Stirrer
- 39: Photometric unit
- 40: Cleaning unit
- 41: Control unit
- 42: Input unit
- 43: Analyzing unit
- 44: Storage unit
- 45: Output unit
- 46: Display unit

### BEST MODE(S) FOR CARRYING OUT THE INVENTION

An analyzer according to an embodiment of the present invention will be described with reference to the drawings, taking an analyzer that performs a biochemical analysis on a specimen, such as blood and urine, as an example. The present invention is not limited to the embodiment. Like reference parts are denoted by like numerals throughout the drawings.

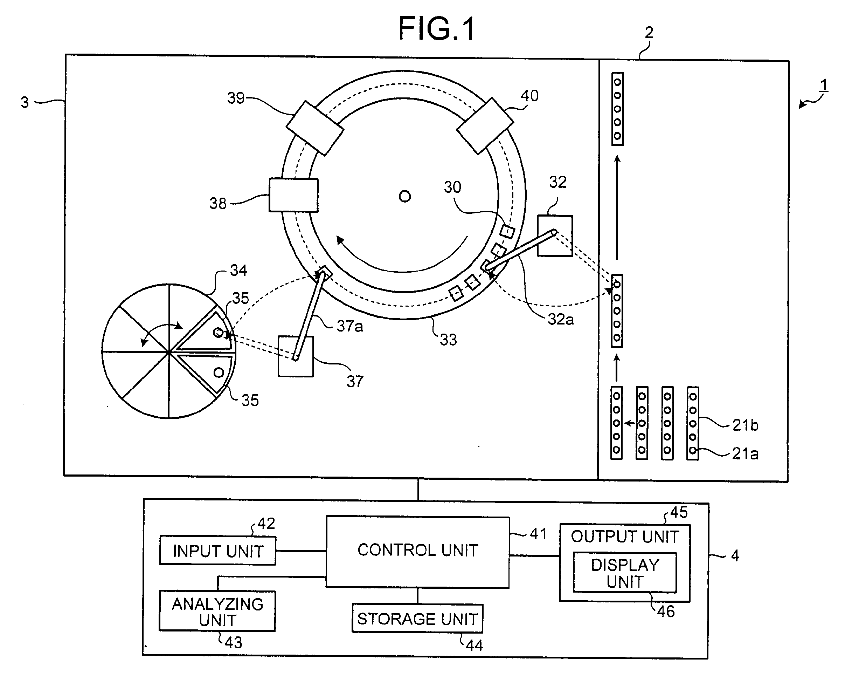

FIG. 1 is a schematic diagram showing a configuration of an analyzer 1 according to the embodiment. As shown in FIG. 1, the analyzer 1 includes a specimen transfer mechanism 2 that sequentially transfers specimen vessels that contain specimens to be analyzed, a measurement system 3 that dispenses specimens and reagents into reaction vessels 30 and optically measures reactions that occur in the reaction vessels 30, and a control system 4 that controls the entire analyzer 1 that has the specimen transfer mechanism 2 and the measurement system 3. The control system 4 analyzes a result of measurement performed by the measurement system 3. The analyzer 1 automatically performs biochemical analyses on plural specimens with the cooperation of these mechanisms.

The specimen transfer mechanism 2 holds plural specimen vessels 21a that contain specimens such as blood, urine, and fluid, and has plural specimen racks 21b that sequentially transfer specimens in the direction of arrows in the drawing. The specimen in the specimen vessel 21a that has been transferred to a predetermined position on the specimen transfer mechanism 2 is dispensed into the reaction vessel 30, which is transferred on a reaction table 33 in an aligned manner, by a specimen dispensing unit 32.

The measurement system 3 mainly has the specimen dispensing unit 32, the reaction table 33, a reagent container 34, a reagent dispensing unit 37, a stirrer 38, a photometric unit 39, and a cleaning unit 40. The specimen dispensing unit 32 has an arm 32a that is movable up and down in a vertical direction and rotatable about a vertical line that passes through a base end portion thereof as a center axis. At an end portion of this arm 32a, a specimen nozzle through which a specimen is sucked in and discharged out is attached. The specimen dispensing unit 32 has a not-shown sucking/discharging mechanism that uses a sucking/discharging syringe or a piezo-electric device.
The specimen dispensing unit 32 sucks in a specimen through the specimen nozzle from the specimen vessel 21a that has been transferred to the predetermined position on the specimen transfer mechanism 2 described above, and discharges the specimen into the reaction vessel 30 by rotating the arm 32a in a clockwise direction in the drawing.

The reaction table 33 transfers the reaction vessel 30 to predetermined positions to perform dispensation of a specimen or a reagent to the reaction vessel 30, stirring, cleaning, or optical measurement with respect to the reaction vessel 30. The reaction table 33 is rotatable about a vertical line that passes through the center of the reaction table 33 as a rotation axis by a driving force of a not-shown driving mechanism with a control by the control unit 41. An openable and closable lid and a thermostatic bath not shown are provided above and below the reaction table 33, respectively.

The reagent container 34 can house reagent vessels 35 in which reagents to be dispensed into the reaction vessels 30 are stored. In the reagent container 34, plural rooms are arranged at regular intervals, and in each of the rooms, the reagent vessel 35 is detachably housed. The reagent container 34 can rotate in a clockwise or counterclockwise direction about a vertical line that passes through the center of the reagent container 34 as a rotation axis, and transfers a desirable one of the reagent vessels 35 to a reagent sucking position for the reagent dispensing unit 37. Above the reagent container 34, an openable and closable lid (not shown) is provided. Also, under the reagent container 34, a thermostatic bath is provided. Therefore, when the reagent vessel 35 is housed inside the reagent container 34 and the reagent container 34 is closed with the lid, the reagent in the reagent vessel 35 is kept at a constant temperature so that evaporation and degeneration of the reagent is suppressed.

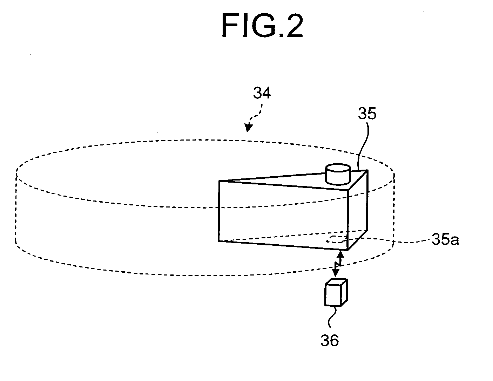

Moreover, as shown in FIG. 2, an RFID tag 35a that stores reagent information on the reagent contained in the reagent vessel 35 is attached to a bottom surface of the reagent vessel 35. The RFID tag 35a is a tag-shaped information storage medium that is used in an RFID (radio frequency identification) system. Various kinds of information stored in the RFID tag 35a are readable, writable, and re-writable through radio waves of a predetermined frequency that instruct writing and reading. The RFID tag 35a stores history information that is generated as the reagent in the reagent vessel 35 is used, in addition to the type of reagent, analytical item for which the reagent is used, lot number, and bottle number, as the reagent information. The RFID tag 35a stores a use-start time of the reagent in the reagent vessel, to which the RFID tag 35a is attached, and a remaining amount of the reagent in the reagent vessel 35, to which the RFID tag 35a is attached, as the history information.

As shown in FIG. 2, an RFID reader/writer 36 that performs reading and writing from and to the RFID tag 35a is provided under the reagent container 34. The RFID reader/writer 36 writes the history information, which is generated as the reagent in the reagent vessel 35 is used, into the RFID tag 35a attached to the reagent vessel 35, and reads the history information of the reagent in the reagent vessel 35, which is stored in the RFID tag 35a, through radio waves of a predetermined frequency.

The RFID reader/writer 36 writes the use-start time in the RFID tag 35a based on the time when the reagent vessel 35 is opened, and reads the use-start time from the RFID tag 35a before the use of the reagent in the reagent vessel 35. Also, the RFID reader/writer 36 writes a value obtained by subtracting a reagent amount that has been used between the previous writing and the present writing from the remaining reagent amount at the previous writing in the RFID tag 35a as the remaining reagent amount, and reads the remaining reagent amount from the RFID tag 35a before the use of the reagent in the reagent vessel 35. The RFID reader/writer 36 reads the history information from the RFID tag 35a each time the analyzer is activated. Furthermore, the RFID reader/writer 36 writes, after a reagent dispensation, a value obtained by subtracting a reagent amount that has been dispensed at the reagent dispensation from the remaining reagent amount at the previous writing in the RFID tag 35a as a new remaining reagent amount, and reads, before the reagent dispensation, the remaining reagent amount from the RFID tag 35a attached to the reagent vessel 35, in which the reagent to be dispensed is contained. The RFID reader/writer 36 performs reading, writing, and re-writing of information from and to the RFID tag 35a under a control of the control unit 41 described later, and outputs information read from the RFID tag 35a to the control unit 41.

The reagent dispensing unit 37 has an arm 37a to which a reagent nozzle that sucks in and discharges out a reagent is attached at an end portion similarly to the specimen dispensing unit 32. The arm 37a is movable up and down in a vertical direction and rotatable about a vertical line that passes through a base end portion thereof as a center axis. The reagent dispensing unit 37 sucks in a reagent in the reagent vessel 35 that has been transferred to a predetermined position on the reagent container 34 through the reagent nozzle, and discharges out to dispense the reagent into the reaction vessel 30 that has been transferred to a predetermined position on the reaction table 33 by rotating the arm 37a in a clockwise direction in the drawing. The stirrer 38 stirs the specimen and the reagent dispensed into the reaction vessel 30, to promote reaction.

The photometric unit 39 measures optical properties of reaction liquid inside the reaction vessel 30 that has been transferred to a predetermined measuring position. A result of measurement by this photometric unit 39 is output to the control unit 41, and analyzed by an analyzing unit 43.

The cleaning unit 40 sucks and discharges mixture liquid in the reaction vessel 30 for which measurement by the photometric unit 39 has been finished, and injects therein a cleaning liquid such as detergent and cleaning water and then sucks them away with a not-shown nozzle, thereby cleaning the reaction vessel 30. This cleaned reaction vessel 30 is reused. Depending on the type of examination, the reaction vessel 30 can be disposed after finishing a single measurement.

Next, the control system 4 is described. The control system 4 includes the control unit 41, an input unit 42, the analyzing unit 43, a storage unit 44, and an output unit 45. Each of components in the measurement system 3 and the control system 4 is electrically connected to the control unit 41.

The control unit 41 is constructed with a use of a CPU and the like, and controls processing and operations of each of components in the analyzer 1. The control unit 41 performs a predetermined input/output control of information input to and output from each of components, and also performs predetermined information processing on such information.

The control unit 41 determines whether a proper analysis is performable using a reagent in the reagent vessel 35, to which the RFID tag 35a is attached, based on the history information in the RFID tag 35a read by the RFID reader/writer 36. Specifically, the control unit 41 determines whether the validity period after opening of the reagent in the reagent vessel 35 has been expired, based on the use-start time read by the RFID reader/writer 36 before the use of the reagent in the reagent vessel 35. This validity period after opening indicates the valid days, in which the reagent in the reagent vessel 35 can be used after the reagent vessel 35 is opened. If the reagent is within the validity period after opening, there is little influence of a change in activity of the reagent on the measurement. Also, the control unit 41 determines whether the reagent has a sufficient amount for the analysis based on the remaining reagent amount read by the RFID reader/writer 36 before the use of the reagent in the reagent vessel 35.

Also, the control unit 41 determines, each time the analyzer 1 is activated, whether a proper analysis is performable using the reagent in the reagent vessel 35, to which the RFID tag 35a is attached, based on the history information read by the RFID reader/writer 36. Furthermore, the control unit 41 determines, before each reagent dispensation, whether the reagent has a sufficient amount for the analysis based on the remaining reagent amount read by the RFID reader/writer 36.

The input unit 42 is constructed with a use of a keyboard, a mouse, and the like, and obtains various kinds of information necessary for analysis of a specimen, instruction information for analysis operation, and the like from an external source. The analyzing unit 43 performs a component analysis and the like of a specimen based on a result of absorbance measurement of the specimen acquired from the photometric unit 39.

The storage unit 44 is constructed with a use of a hard disk that magnetically stores information, and a memory that loads, when the analyzer 1 performs processing, various kinds of computer programs related to the processing from the hard disk to electrically store therein. The storage unit 44 stores various kinds of information including a result of analysis of a specimen, and the like. The storage unit 44 can include an auxiliary storage device that can read information from a storage medium such as a CD-ROM, a DVD-ROM, and a PC card.

The output unit 45 is constructed with a use of a printer, a speaker, and the like, and outputs various kinds of information including a result of analysis of a specimen. The output unit 45 can output information conforming to a predetermined format to an external device through a not shown communication network. When the control unit 41 determines that a proper analysis is not performable using the reagent in the reagent vessel 35, the output unit 45 outputs a warning to notify that a proper analysis is not performable using the reagent in the reagent vessel 35.
The output unit 45 has a display unit 46 that is constructed with a use of a display.

In the analyzer 1 constructed as described above, after the specimen dispensing unit 32 dispenses a specimen in the specimen vessel 21a that has been transferred to a predetermined position by the specimen transfer mechanism 2, the reagent dispensing unit 37 dispenses a reagent in the reagent vessel 35, and the stirrer 38 stirs inside the reaction vessel 30, the photometric unit 39 performs optical measurement on reaction liquid of the specimen and the reagent, and the analyzing unit 43 analyzes a result of this measurement, thereby automatically performing a component analysis and the like of the specimen. Moreover, the cleaning unit 40 cleans the reaction vessel 30, which has been transferred after the measurement by the photometric unit 39 is finished, while transferring the reaction vessel 30. Thus, a series of analysis operation is repeatedly performed successively.

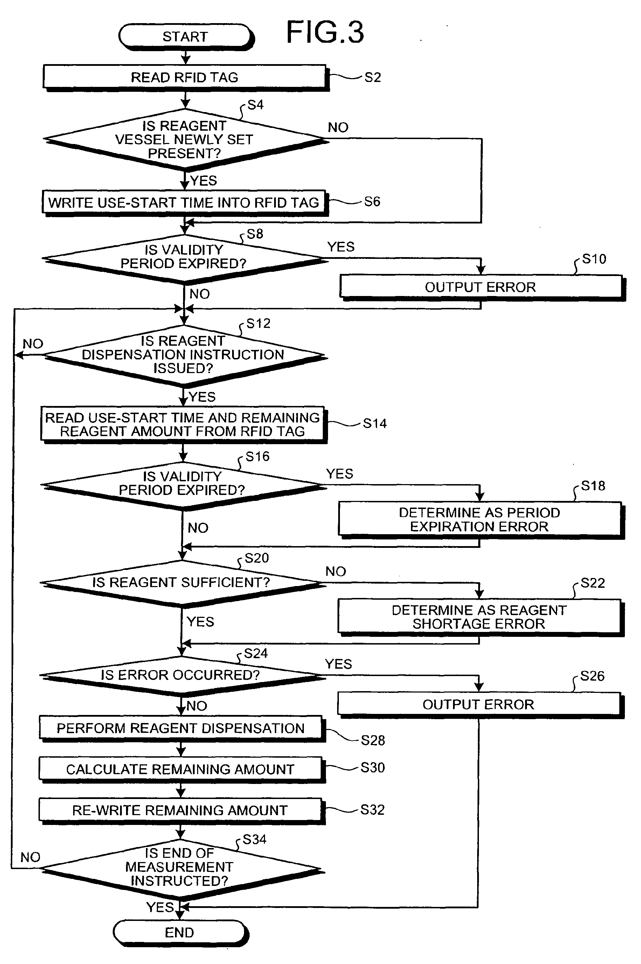

Next, a reagent management in the analyzer 1 shown in FIG. 1 is described referring to FIG. 3. As shown in FIG. 3, after the activation of the analyzer 1, firstly, the RFID reader/writer 36 performs RFID-tag reading, in which information in the RFID tag 35a attached to each of the reagent vessels 35 in which each reagent to be used is contained is read and output to the control unit 41 (step S2). The information read by the RFID reader/writer 36 is output to the control unit 41 with its associated position information of each reagent in the reagent container 34.

The control unit 41 compares the information of each RFID tag 35a at the previous writing and the information of each RFID tag 35a at the present reading, and determines whether a reagent vessel 35 that is newly set in the analyzer 1 is present (step S4). A use-start time is written for a reagent vessel 35 by the RFID reader/writer 36 when it is first set in the analyzer 1 after opening. Thus, when the use-start time is not present in the information read from the RFID tag 35a, it is determined that the reagent vessel 35, to which this RFID tag 35a is attached, is the reagent vessel 35 set in an analyzer for the first time after the opening. Therefore, when the control unit 41 determines that the reagent vessel 35 that is newly set in the analyzer 1 is present based on the information read from the RFID tag 35a (step S4: YES), the control unit 41 causes the RFID reader/writer 36 to write the use-start time in the RFID tag 35a that is attached to the reagent vessel 35 determined to be newly set (step S6). Conversely, when the control unit 41 determines that the reagent vessel 35 that is newly set in the analyzer 1 is not present (step S4: NO), the process proceeds to step S8.

Next, the control unit 41 determines whether the validity period after opening of the reagent in each of the reagent vessels 35 has been expired based on the use-start time out of the information read from the RFID tag 35a (step S8). This validity period after opening is stored in the storage unit 44 in the analyzer 1 in association with each reagent, or can be stored in each of the RFID tags 35a. When the control unit 41 determines that a period from the use-start time to the time of the present reading exceeds the validity period after opening (step S8: YES), the control unit 41 causes the output unit 45 to output an error notifying that the validity period after opening of the reagent in the reagent vessel 35 has been expired (step S10). The output unit 45 outputs, in addition to this error, an error screen or an error sound indicating position information of the reagent vessel 35 that contains the reagent whose validity period after opening has been expired. As described, in the analyzer 1, the reagent start time in the RFID tag 35a that is attached to each of the reagent vessels 35 is read each time the analyzer 1 is activated, and whether the reagent vessel 35 whose validity period after opening has been expired is present is checked based on the reagent start time. Therefore, a proper analysis can be performed in which the use of a reagent whose validity period after opening has been expired is prevented.

When the control unit 41 determines that the validity period after opening of the reagent in each of the reagent vessels 35 has not expired (step S8: NO), or when the error output support (step S10) has been finished, the control unit 41 determines whether a reagent dispensation instruction is issued (step S12).

The control unit 41 repeats the determination at step S12 until a reagent dispensation instruction is issued, and when the control unit 41 determines that a reagent dispensation instruction is issued (step S12: YES), the control unit 41 causes the RFID reader/writer 36 to read the use-start time and the remaining reagent amount from the RFID tag 35a attached to the reagent vessel 35 in which the reagent to be dispensed is contained (step S14).

Subsequently, the control unit 41 determines whether the validity period after opening of the reagent in the reagent vessel 35 containing the reagent to be dispensed has been expired based on the reagent start time out of the information read by the RFID reader/writer 36 (step S16). When the control unit 41 determines that the validity period after opening of the reagent in the reagent vessel 35 containing the reagent for which the instruction for dispensation is issued has been expired (step S16: YES), the control unit 41 determines that the reagent for which dispensation is instructed has a period expiration error, which means the validity period after opening thereof has been expired (step S18).

When the control unit 41 determines that the validity period after opening of the reagent has not been expired (step S16: NO), or when the period-expiration error determination (step S18) has been finished, the control unit 41 determines whether the reagent for which the dispensation is instructed has a sufficient amount for an analysis based on the remaining reagent amount out of the information read by the RFID reader/writer 36 (step S20). In this case, the control unit 41 determines whether the reagent for which the dispensation is instructed has a sufficient amount based on the number of specimens, for which the analysis of an analytical item in which the reagent is dispensed and used has been accepted, the amount of reagent to be dispensed with a single dispensation, and the remaining reagent amount.

When the control unit 41 determines that the reagent for which dispensation is instructed does not have a sufficient amount for the analysis (step S20: NO), the control unit 41 determines that the reagent for which dispensation is instructed has a reagent shortage error, which means the reagent runs short during the measurement (step S22). When the control unit 41 determines that the reagent for which dispensation is instructed has a sufficient amount for the analysis (step S20: YES), or when the reagent-shortage error determination (step S22) has been finished, the control unit 41 determines whether there is the period expiration error or the reagent shortage error (step S24).

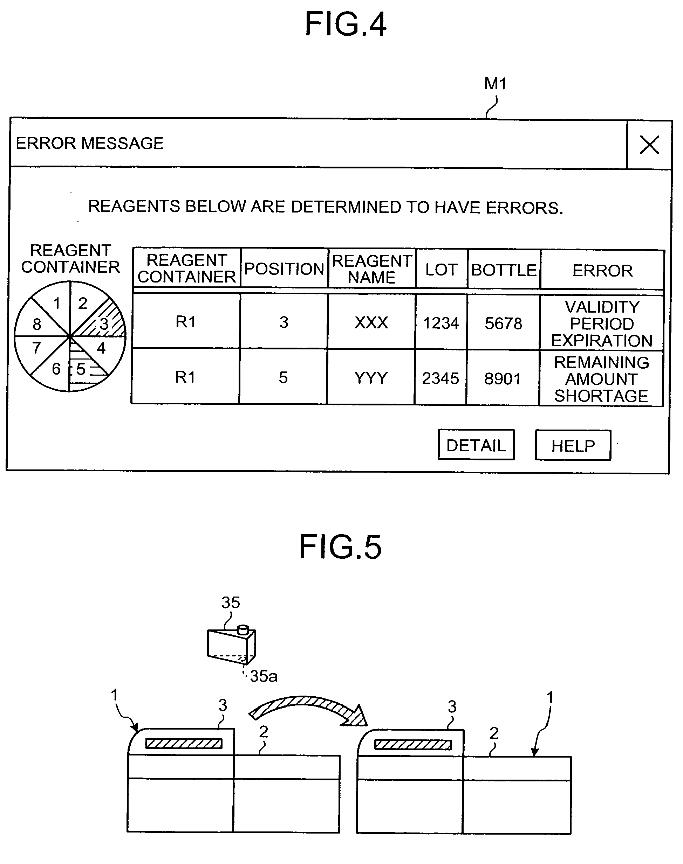

When the control unit 41 determines that there is the period expiration error or the reagent shortage error (step S24: YES), the control unit 41 causes the output unit 45 to output an error (step S26), and stops the analyzer 1. In this case, as shown in FIG. 4, for example, the display unit 46 displays, together with an image in which the position of the reagent vessel 35 that has the error is mapped, an error message M1 for the period expiration error and the reagent shortage error, in which the position of the reagent vessel 35 in the reagent container 34, the name, the lot information, the bottle information, and each of error contents are indicated in an associated manner. An operator of the analyzer 1 can recognize the error contents, the position of the reagent vessel 35 that has the error, and the like precisely, by checking this error message M1. Alternatively, the output unit 45 can output error sound informing each of the error contents.

Conversely, when the control unit 41 determines that there is no period expiration error or reagent shortage error (step S24: NO), the control unit 41 determines that a proper analysis is performable using the reagent for which dispensation is instructed, and performs the reagent dispensation based on the dispensation instruction (step S28). The control unit 41 calculates an amount by subtracting the reagent amount that is dispensed in this reagent dispensation from the remaining reagent amount at the previous RFID tag writing, as a new remaining reagent amount (step S30). The RFID reader/writer 36 then re-writes the remaining reagent amount stored in the RFID tag 35a attached to the reagent vessel 35 for which the dispensation has been finished, to replace with the remaining reagent amount calculated by the control unit 41 (step S32). As described, in the analyzer 1, the remaining reagent amount in the RFID tag 35a attached to each of the reagent vessels 35 is read and written each time the dispensation is instructed, and whether the measurement is performable is determined with the read remaining reagent amount. Therefore, a proper analysis in which the reagent shortage during the measurement is avoided can be performed.

Subsequently, the control unit 41 determines whether end of measurement is instructed (step S34), and when it is determined that end of measurement is instructed (step S34: YES), the measurement by the analyzer is ended. When it is determined that end of measurement is not instructed (step S34: NO), the process returns to step S12, and whether an instruction for a reagent to be dispensed next is issued is determined.

As described, in the analyzer 1 according to the embodiment, history information generated as a reagent in the reagent vessel 35 is used can be written as needed into the RFID tag 35a attached to the reagent vessel 35, and whether a proper analysis is performable using the reagent in the reagent vessel 35, to which the RFID tag 35a is attached, is determined by reading the history information from the RFID tag 35a. In other words, in the analyzer 1, reading and writing are performed with respect to the RFID tag 35a in each of the analyzers to manage reagents.

More specifically, in the analyzer 1, the actual use-start time and current remaining reagent amount are stored in the RFID tag 35a that is attached to the reagent vessel 35. Even when a reagent vessel 35 is not the one that has been set since the reagent unsealing, the actual use-start time and current remaining reagent amount of the reagent in the reagent vessel 35 can be grasped by reading information from the RFID tag 35a of this reagent vessel 35 in each of the analyzers 1 independently. Therefore, according to the embodiment, by reading and writing data from and to the RFID tag 35a, the information of the reagent start time and the remaining reagent amount can be communicated among the analyzers 1.

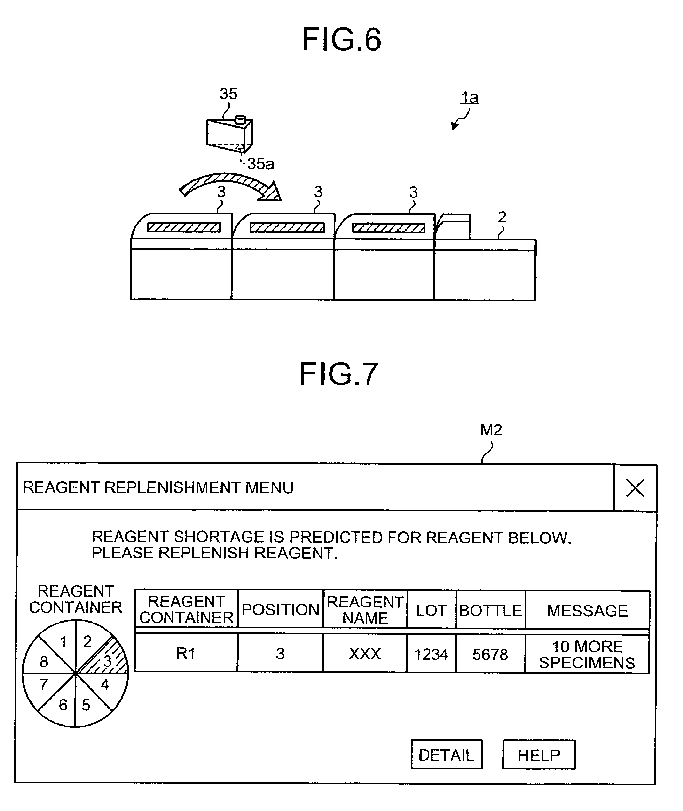

Thus, in the analyzer 1 according to the embodiment, as shown in FIG. 5, even when the reagent vessel 35 that has once been used in another one of the analyzers 1 is moved and re-set in the analyzer 1, by reading information from the RFID tag 35a of the re-set reagent vessel 35, the actual use-start time and current remaining reagent amount of this reagent vessel 35 can be accurately grasped. In the analyzer 1, whether expiration of the validity period after opening and shortage of reagent during analysis occur is determined based on the read use-start time and remaining reagent amount, and therefore, use of a reagent whose validity period after opening is expired is prevented, and the shortage of reagent during analysis can be avoided. As shown in FIG. 6, of course, according to the embodiment, by reading the history information in the RFID tag 35a that is attached to the reagent vessel 35, even when the reagent vessel 35 that has been used in one of the measurement systems 3 is re-set in another one of the measurement systems 3 in an analyzer 1a that includes plural measurement systems 3, a proper analysis can be performed using the reagent thus re-set.

Moreover, in the analyzer 1, reagents can be managed by reading and writing information from and to the RFID tag 35a in the independent analyzer 1. Therefore, a large-scale and complicated system in which each of analyzers is connected through a network line as in a conventional art is not required to be built, and the configuration can be made simple.

In the present embodiment, by predicting shortage of reagent based on a remaining reagent amount read from the RFID tag 35a and a reagent amount used for a single specimen, and by outputting a warning that instructs replenishment of the reagent, supports for operators for recognizing reagent replacement timing and determining reagent replacement timing can be performed. In this case, as shown in FIG. 7, for example, the display unit 46 displays a reagent replenishment menu M2, in which the position of the reagent vessel 35, the name, the number of specimens that can be measured with the current reagent amount, and the like are indicated together with an image that shows the position in the reagent container 34 of the reagent vessel 35 for which shortage of reagent is predicted is mapped, under the control of the control unit 41. An operator can see the position and the name of the reagent vessel 35 for which shortage of reagent is predicted, and can recognize how many more specimens can be measured with this reagent, and therefore, the reagent replacement can be performed in an effective and planned manner.

Moreover, the analyzer can be implemented by using a computer system that executes a computer program prepared in advance. The computer system performs operations of the analyzer by reading and executing the computer program stored in a predetermined storage medium. The predetermined storage medium includes various kinds of recording media storing a computer program that can be read by the computer system, such as a "communication medium" or the like that retains a computer program for a short term at the time of transmission of the computer program such as a hard disk drive (HDD) provided inside or outside the computer system, in addition to a "portable physical medium" such as a flexible disk (FD), a CD-ROM, an MO disk, a DVD disk, an optical disk, and an IC card. Furthermore, the computer system performs operations of the analyzer by obtaining a computer program from an administration server or another computer system that is connected through a network line, and by executing the obtained computer program. In the above embodiment, processes of steps S14 and S16 are performed after step S12 shown in FIG. 3. When the elapsed time from the validity period expiration determination at step S8 to the reagent dispensation instruction at step S12 is short (for example, within a day), the determination of the validity period expiration is not needed to be repeated. Thus, the process can proceed directly to step S20 after determining that the validity period has been expired at step S8. In this case, the processes at steps S14 and S16 can be omitted, and therefore, the entire processing time can be shortened.

### INDUSTRIAL APPLICABILITY

As described, the present invention is useful for an analyzer that analyzes a specimen using a reagent in a reagent vessel, and is particularly suitable for a case where a proper analysis is desired to be performed using a reagent in a reagent vessel set in the apparatus, without using a large-scale analysis system.

## Claims

1. An analyzer that analyzes a specimen using a reagent in a reagent vessel, comprising:
an information storage medium that is attached to the reagent vessel and is capable of communicating with an external device through radio waves of a predetermined frequency;
a writing unit that writes history information that is generated as the reagent in the reagent vessel is used into the information storage medium;
a reading unit that reads the history information from the information storage medium that is attached to the reagent vessel containing the reagent to be used; and
a determining unit that determines whether a proper analysis is performable using the reagent in the reagent vessel, to which the information storage medium is attached, based on the history information read by the reading unit.

2. The analyzer according to claim 1, wherein the history information comprises a use-start time of the reagent in the reagent vessel,
the writing unit writes the use-start time into the information storage medium based on a time when the reagent vessel is opened,
the reading unit reads the use-start time from the information storage medium prior to use of the reagent in the reagent vessel, and
the determining unit determines whether a predetermined validity period after opening of the reagent in the reagent vessel has been expired based on the use-start time read by the reading unit, prior to use of the reagent in the reagent vessel.

3. The analyzer according to claim 1, wherein the history information comprises a remaining reagent amount in the reagent vessel,
the writing unit writes a value obtained by subtracting a reagent amount that is used between previous writing and present writing from the remaining reagent amount at previous writing, as a new remaining reagent amount into the information storage medium,
the reading unit reads the remaining reagent amount from the information storage medium that is attached to the reagent vessel prior to use of the reagent in the reagent vessel, and
the determining unit determines whether the reagent has a sufficient amount for an analysis based on the remaining reagent amount read by the reading unit.

4. The analyzer according to claim 1, further comprising an output unit that outputs a warning to notify that a proper analysis is not performable using the reagent in the reagent vessel when the determining unit determines that a proper analysis is not performable using the reagent in the reagent vessel.

5. The analyzer according to claim 1, wherein the reading unit reads, each time the analyzer is activated, the history information from the information storage medium, and
the determining unit determines, each time the analyzer is activated, whether a proper analysis is performable using the reagent in the reagent vessel, to which the information storage medium is attached, based on the history information read by the reading unit.

6. The analyzer according to claim 3 wherein the writing unit writes, after dispensing the reagent, an amount obtained by subtracting an amount of reagent dispensed by the reagent dispensation from the remaining reagent amount at previous writing, as the new remaining reagent amount, into the information storage medium,
the reading unit reads, prior to the reagent dispensation, the remaining reagent amount from the information storage medium that is attached to the reagent vessel containing the reagent to be dispensed, and
the determining unit determines, prior to the reagent dispensation, whether the reagent has a sufficient amount for an analysis based on the remaining reagent amount read by the reading unit.

7. An analysis method for analyzing a specimen using a reagent in a reagent vessel, comprising:
writing history information that is generated as the reagent in the reagent vessel is used into an information storage medium that is attached to the reagent vessel and is capable of communicating with an external device through radio waves of a predetermined frequency;
reading the history information from the information storage medium that is attached to the reagent vessel containing the reagent to be used; and
determining whether a proper analysis is performable using the reagent in the reagent vessel, to which the information storage medium is attached, based on the history information read at the reading.

8. The analysis method according to claim 7, wherein the history information comprises a use-start time of the reagent in the reagent vessel,
the writing includes writing the use-start time into the information storage medium based on a time when the reagent vessel is opened,
the reading includes reading the use-start time from the information storage medium prior to use of the reagent in the reagent vessel, and
the determining includes determining whether a predetermined validity period after opening of the reagent in the reagent vessel has been expired based on the use-start time read at the reading, prior to use of the reagent in the reagent vessel.

9. The analysis method according to claim 7, wherein the history information comprises a remaining reagent amount in the reagent vessel,
the writing includes writing a value obtained by subtracting a reagent amount that is used between previous writing and present writing from the remaining reagent amount at previous writing, as a new remaining reagent amount into the information storage medium,
the reading includes reading the remaining reagent amount from the information storage medium prior to use of the reagent in the reagent vessel, and
the determining includes determining whether the reagent has a sufficient amount for an analysis based on the remaining reagent amount read at the reading.

10. The analysis method according to claim 7, further comprising outputting a warning to notify that a proper analysis is not performable using the reagent in the reagent vessel when it is determined at the determining that a proper analysis is not performable using the reagent in the reagent vessel.

11. The analysis method according to claim 7, wherein the reading includes reading the history information from the information storage medium each time the analyzer is activated, and
the determining includes determining, each time the analyzer is activated, whether a proper analysis is performable using the reagent in the reagent vessel, to which the information storage medium is attached, based on the history information read at the reading.

12. The analysis method according to claim 9 wherein the writing includes writing, after dispensing the reagent, an amount obtained by subtracting an amount of reagent dispensed by the reagent dispensation from the remaining reagent amount at previous writing, as the new remaining reagent amount, into the information storage medium,
the reading includes reading, prior to the reagent dispensation, the remaining reagent amount from the information storage medium that is attached to the reagent vessel containing the reagent to be dispensed, and
the determining includes determining, prior to the reagent dispensation, whether the reagent has a sufficient amount for an analysis based on the remaining reagent amount read at the reading.
